# EUROPEAN PATENT APPLICATION

(11) **EP 3 181 282 A1**
(43) Date of publication of application: **21.06.2017**
(21) Application number: 16200403.0
(22) Date of filing: 24.11.2016
(51) Int. Cl.: B23H 1/10, B23H 7/02, B23H 7/36

(54) **MACHINING FLUID LEVEL ADJUSTING MECHANISM FOR WIRE ELECTRIC DISCHARGE MACHINE**

(30) Priority: 15.12.2015 JP 2015244102
(71) Applicant: FANUC CORPORATION, Oshino-mura Minamitsuru-gun Yamanashi 401-0597 (JP)
(72) Inventor: YAMANE, Hikaru, Minamitsuru-gun, Yamanashi 401-0597 (JP)
(74) Representative: Ward, James Norman

(57) **Abstract**

A wire electric discharge machine includes a mechanism for adjusting the level of a machining fluid in a machining tank. This mechanism includes a machining fluid intake opening provided in the machining tank so as to be vertically movable, an exhaust valve for adjusting an exhaust amount of the machining fluid taken from the machining fluid intake opening, and a machining fluid outlet portion that guides the machining fluid taken from the machining fluid intake opening to the exhaust valve. The mechanism controls such that the level of the machining fluid in the machining tank becomes uniform by adjusting the exhaust valve.

## Description

### BACKGROUND OF THE INVENTION

### 1. Field of the Invention

The present invention relates to a machining fluid level adjusting mechanism for a wire electric discharge machine, and more particularly to a machining fluid level adjusting mechanism, which enables reduction in vibration caused in exhausting a machining fluid and rapid exhaust of the machining fluid with high temperature staying in the vicinity of the surface of the fluid, for a wire electric discharge machine.

### 2. Description of the Related Art

A wire electric discharge machine that machines a workpiece which is immersed into a machining fluid such as water or oil employs various mechanisms for adjusting the level of the machining fluid.

For example, a conventional technique disclosed in Japanese Patent Application Laid-Open No. 04-261712 causes a machining fluid exceeding a certain level to be overflown and exhausted to adjust the level of the fluid by using an exhaust opening which is adjustable in height. In addition, a conventional technique disclosed in Japanese Patent Application Laid-Open No. 06-320339 uses a sensor detecting the level of a machining fluid and an exhaust valve that can adjust an exhaust amount, wherein the exhaust valve is opened to exhaust the machining fluid when the level of the fluid exceeds a certain level, thereby adjusting the level of the fluid. In addition, the method of properly using the techniques disclosed in Japanese Patent Application Laid-Open No. 04-261712 and Japanese Patent Application Laid-Open No. 06-320339 according to the machining detail is disclosed in JP 2010-099813 A.

However, the mechanism for adjusting the level of a fluid by an overflow entails a problem such that vibration is caused due to the machining fluid dropping from a high position, and the generated vibration adversely affects machining. In addition, the mechanism using the fluid level sensor and the exhaust valve entails a problem such that a high-temperature machining fluid staying in the vicinity of the surface of the machining fluid cannot rapidly be exhausted, since the portion from which the fluid is to be exhausted is located near the bottom surface of a machining tank.

### SUMMARY OF THE INVENTION

In view of this, an object of the present invention is to provide a machining fluid level adjusting mechanism, which enables reduction in vibration caused in exhausting a machining fluid and rapid exhaust of the machining fluid with high temperature staying in the vicinity of the surface of the fluid, for a wire electric discharge machine.

According to the present invention, the machining fluid in the vicinity of the surface of the fluid is exhausted without being dropped, whereby the vibration caused in exhausting the machining fluid is reduced, and the high-temperature machining fluid staying in the vicinity of the surface of the fluid is rapidly exhausted. Thus, the temperature of the machining fluid in the machining tank is equalized, whereby high-quality machining is enabled.

In the machining fluid level adjusting mechanism in the wire electric discharge machine according to the present invention, the wire electric discharge machine includes a wire electrode stretched between an upper head and a lower head, and machines a workpiece which is fixed on a table in a machining tank and immersed in a machining fluid. According to a first aspect, the machining fluid level adjusting mechanism includes : a machining fluid intake opening which is provided in the machining tank so as to be vertically movable; an exhaust valve for adjusting an exhaust amount of the machining fluid taken from the machining fluid intake opening; and a machining fluid outlet portion that guides the machining fluid taken from the machining fluid intake opening to the exhaust valve, wherein the machining fluid level adjusting mechanism is configured to control such that a level of the machining fluid in the machining tank becomes uniform by adjusting the exhaust valve.

The machining fluid level adjusting mechanism may include a drain mechanism for draining the machining fluid in the machining tank, separately from the machining fluid intake opening.

According to a second aspect, the machining fluid level adjusting mechanism includes: two or more machining fluid intake openings from which a machining fluid is taken at each of positions with different heights and which are provided in the machining tank so as to be vertically movable; an exhaust valve for adjusting an exhaust amount of the machining fluid taken from the machining fluid intake openings; and a machining fluid outlet portion that guides the machining fluid taken from the machining fluid intake openings to the exhaust valve, wherein the machining fluid level adjusting mechanism is configured to control such that a level of the machining fluid in the machining tank becomes uniform by adjusting the exhaust valve.

The machining fluid level adjusting mechanism may include a drain mechanism for draining the machining fluid in the machining tank, separately from the machining fluid intake opening.

According to the present invention, the machining fluid in the vicinity of the surface of the fluid is exhausted without being dropped, whereby the vibration caused in exhausting the machining fluid is reduced, and the high-temperature machining fluid staying in the vicinity of the surface of the fluid is rapidly exhausted. Thus, the temperature of the machining fluid in the machining tank is made uniform, whereby high-quality machining is enabled.

### BRIEF DESCRIPTION OF THE DRAWINGS

The aforementioned and other objects and features of the present invention will be apparent from the following description of embodiments with reference to the accompanying drawings in which:
FIG. 1 is a schematic diagram illustrating a configuration of a machining fluid level adjusting mechanism for a wire electric discharge machine according to a first embodiment;
FIG. 2 is a schematic diagram illustrating a configuration of a machining fluid level adjusting mechanism for a wire electric discharge machine according to a second embodiment;
FIG. 3 is a view illustrating the wire electric discharge machine illustrated in FIG. 2 as viewed from diagonally above;
FIG. 4 is a schematic diagram illustrating a configuration of a machining fluid level adjusting mechanism for a wire electric discharge machine according to a third embodiment;
FIG. 5 is a schematic diagram illustrating a configuration of a machining fluid level adjusting mechanism for a wire electric discharge machine according to a fourth embodiment;
FIG. 6 is a view illustrating the wire electric discharge machine illustrated in FIG. 5 as viewed from diagonally above;
FIG. 7 is a schematic diagram illustrating a configuration of a machining fluid level adjusting mechanism for a wire electric discharge machine according to a fifth embodiment;
FIG. 8 is a schematic diagram illustrating a configuration of a machining fluid level adjusting mechanism for a wire electric discharge machine according to a sixth embodiment; and
FIG. 9 is a schematic diagram illustrating a configuration of a machining fluid level adjusting mechanism for a wire electric discharge machine according to a seventh embodiment.

### DETAILED DESCRIPTION OF THE PREFERRED EMBODIMENTS

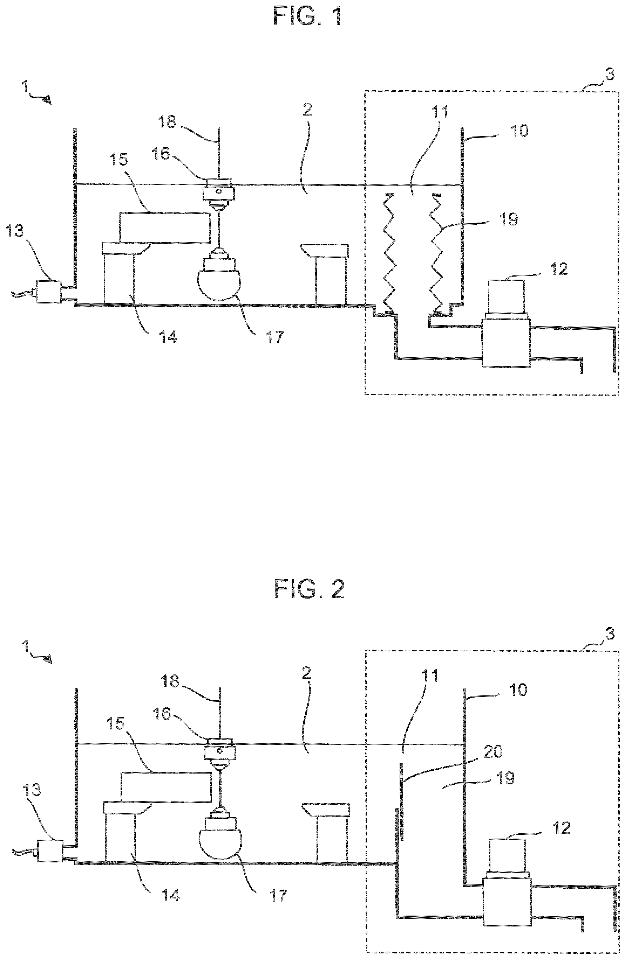

Firstly, a machining fluid level adjusting mechanism for a wire electric discharge machine according to a first embodiment of the present invention will be described with reference to FIG. 1.

A wire electric discharge machine 1 immerses a workpiece 15 fixed on a table 14 in a machining fluid 2 stored in a machining tank 10, applies a voltage between the workpiece 15 and a wire electrode 18, which is guided by an upper head 16 and a lower head 17, to generate an electric discharge between the workpiece 15 and the wire electrode 18, and machines the workpiece 15 by the generated electric discharge.

The wire electric discharge machine 1 includes a machining fluid level adjusting mechanism 3 for adjusting the level of the machining fluid 2 according to the present embodiment. The machining fluid level adjusting mechanism 3 includes an accordion-shaped machining fluid outlet portion 19 provided in the machining tank 10 so as to be vertically movable, and an exhaust valve 12 for adjusting an exhaust amount of the machining fluid 2 taken from a machining fluid intake opening 11 provided at the upper end of the machining fluid outlet portion 19. The machining fluid intake opening 11 of the machining fluid outlet portion 19 is adjusted, manually or by an automatic lifting mechanism (not illustrated), to be located on an appropriate position, for example, at a position slightly lower than the desired level of the machining fluid 2.

The machining tank 10 is supplied with the machining fluid 2 from a supply opening (not illustrated) for promoting circulation of the machining fluid 2 in the machining tank 10, besides the machining fluid 2 to be ejected to a discharge portion during machining. The level of the machining fluid 2 in the machining tank 10 is detected by a sensor 13.

In general, the level of the machining fluid 2 is set to a position higher than the top surface of the workpiece 15 fixed on the table 14 in the machining tank 10. Further, unless the level of the machining fluid 2 is set to be higher than the upper head 16, the machining fluid 2 is likely to scatter, since the machining fluid 2 is ejected from the upper head 16 toward the top side of the workpiece 15. Accordingly, in most cases, the level of the machining fluid is generally set according to the height of the upper head 16.

Subsequently, the operation of the machining fluid level adjusting mechanism 3 according to the present embodiment will be described.

[Step 1] The height of the upper head 16 is determined according to the thickness of the workpiece 15, and the level of the machining fluid is determined according to the height of the upper head 16. The level of the machining fluid may be determined and set by an operator, or may automatically be determined on the basis of the height of the upper head 16 by an machining fluid level determination unit (not illustrated) .

[Step 2] The exhaust valve 12 is closed, and the machining fluid 2 is pressure fed into the machining tank 10 by a fluid reservoir pump (not illustrated) until it is detected by the sensor 13 that the machining fluid 2 reaches the determined level.

[Step 3] The machining fluid intake opening 11 is adjusted to be located at a position slightly lower than the determined level by the lifting mechanism.

[Step 4] The elevation of the level of the machining fluid 2 due to the supply of the machining fluid 2 from the supply opening is detected by the sensor 13, and the level of the machining fluid is adjusted to be uniform through the operation of the exhaust valve 12 by the fluid level adjusting unit.

It does not matter if the order of the step 2 and the step 3 is inverted. However, in the case where the step 3 is executed first, the machining fluid 2 drops from the machining fluid intake opening 11 to cause vibration at the point at which the level of the machining fluid exceeds the height of the machining fluid intake opening 11. However, if the machining is started in a state where the machining fluid 2 fills between the machining fluid intake opening 11 and the exhaust valve 12, the influence caused by the vibration can be avoided.

Further, in the present embodiment, the height of the machining fluid intake opening 11 adjusted in the step 3 may be set to be slightly lower than the level of the machining fluid, as described above. However, it may be set to be much lower than the level of the machining fluid, which does not affect the fluid level adjusting mechanism. It should be noted, however, that this configuration is beyond the purpose of exhausting the high-temperature machining fluid near the surface of the fluid, and thus, it is desirable that the height of the intake opening is set to be slightly lower than the level of the fluid.

According to the method described above, it is possible to construct the machining fluid level adjusting mechanism for the wire electric discharge machine that efficiently exhausts the high-temperature machining fluid without being affected by the vibration caused by the dropping of the machining fluid.

Next, a machining fluid level adjusting mechanism for a wire electric discharge machine according to a second embodiment of the present invention will be described with reference to FIG. 2.

The machining fluid level adjusting mechanism 3 according to the present embodiment includes an overflow plate member 20 mounted in a machining tank 10 so as to be vertically movable, a machining fluid outlet portion 19 that guides the machining fluid 2, which is taken from a machining fluid intake opening 11 that is adjustable in height by adjusting the overflow plate member 20, and an exhaust valve 12 for adjusting the exhaust amount of the machining fluid 2 taken from the machining fluid intake opening 11 of the overflow plate member 20. The overflow plate member 20 is movable in the height direction manually or by an automatic lifting mechanism (not illustrated), whereby the machining fluid intake opening 11 thereof is adjusted to be located on an appropriate position, for example, on a position slightly lower than the desired level of the machining fluid 2. The other configurations and the operation of each component are similar to those of the above-mentioned first embodiment (FIG. 1).

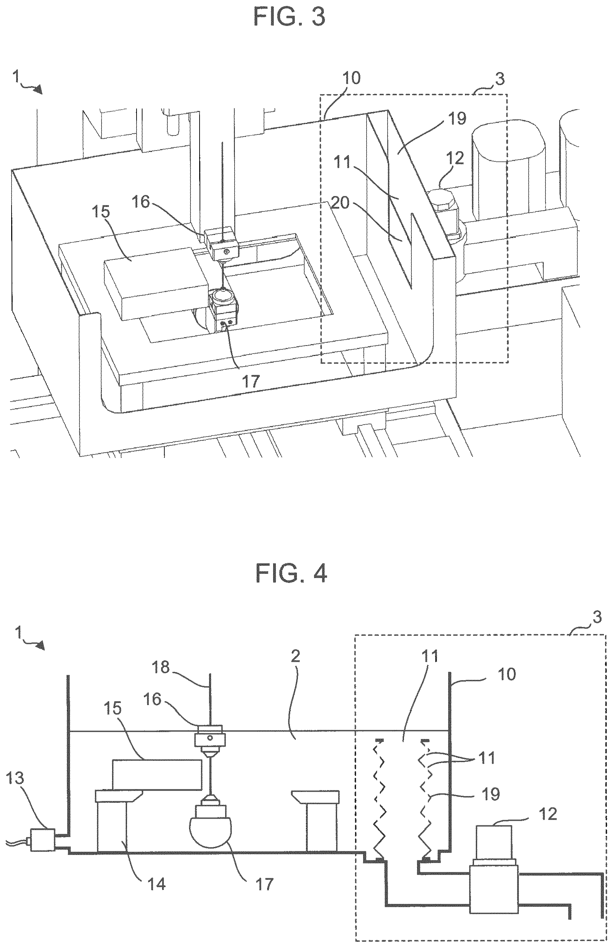

FIG. 3 is a view illustrating the wire electric discharge machine 1 illustrated in FIG. 2 as viewed from diagonally above. Note that, in FIG. 3, a wall on the front surface of the machining tank 10 is not illustrated to allow the inside of the machining tank 10 to be visible.

Next, a machining fluid level adjusting mechanism for a wire electric discharge machine according to a third embodiment of the present invention will be described with reference to FIG. 4.

The machining fluid level adjusting mechanism 3 according to the present embodiment corresponds to the configuration in which, as illustrated in FIG. 4, a plurality of machining fluid intake openings 11 are formed on the accordion-shaped machining fluid outlet portion 19 provided to the machining fluid level adjusting mechanism 3 in the first embodiment illustrated in FIG. 1. The other configurations and the operation of each component are similar to those of the first embodiment.

Since a plurality of machining fluid intake openings 11 are formed on the accordion-shaped machining fluid outlet portion 19, the machining fluid 2 can be taken at each of positions with different heights in the machining tank 10. Therefore, the machining fluid 2 in the machining tank 10 can be more efficiently set to have a uniform temperature depending on the shape of the machining tank 10 or the flow condition of the machining fluid 2. Notably, if the machining fluid intake opening 11 is formed on the machining fluid outlet portion 19 even near the bottom surface of the machining tank 10, the machining fluid 2 is preferentially flown into the machining fluid outlet portion 19 from the machining fluid intake opening 11 near the lower surface of the machining tank 10, which is disadvantageous for the equalization of the temperature of the machining fluid. Therefore, as illustrated in FIG. 4, it is preferable that the machining fluid intake opening 11 is not formed on the machining fluid outlet portion 19 near the lower surface of the machining tank 10.

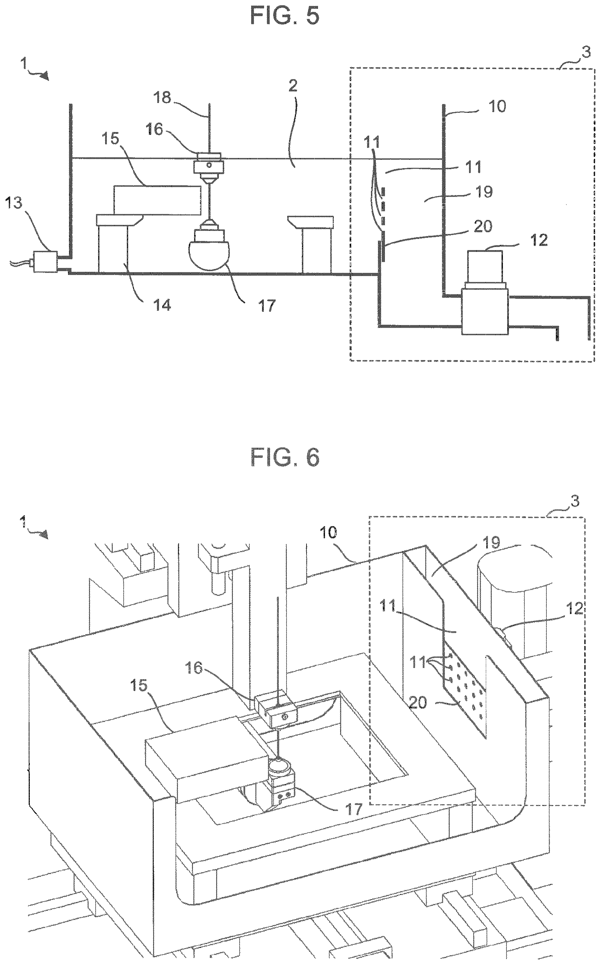

Next, a machining fluid level adjusting mechanism for a wire electric discharge machine according to a fourth embodiment of the present invention will be described with reference to FIG. 5.

The machining fluid level adjusting mechanism 3 according to the present embodiment corresponds to the configuration in which, as illustrated in FIG. 5, a plurality of machining fluid intake openings 11 are formed on the overflow plate member 20 provided to the machining fluid level adjusting mechanism 3 in the second embodiment illustrated in FIG. 2. The other configurations and the operation of each component are similar to those of the second embodiment.

Since a plurality of machining fluid intake openings 11 are formed on the overflow plate member 20, the machining fluid 2 can be taken at each of positions with different heights in the machining tank 10 as in the third embodiment. Therefore, the machining fluid 2 in the machining tank 10 can be more efficiently set to have a uniform temperature depending on the shape of the machining tank 10 or the flow condition of the machining fluid 2. Notably, if the machining fluid intake opening 11 is formed on the machining fluid outlet portion 19 even near the bottom surface of the machining tank 10, the machining fluid 2 is preferentially flown into the machining fluid outlet portion 19 from the machining fluid intake opening 11 near the bottom surface of the machining tank 10, which is disadvantageous for the equalization of the temperature of the machining fluid. Therefore, as illustrated in FIG. 5, it is preferable that the machining fluid intake opening 11 is not formed on the machining fluid outlet portion 19 near the lower surface of the machining tank 10.

FIG. 6 is a view illustrating the wire electric discharge machine 1 illustrated in FIG. 5 as viewed from diagonally above. Note that, in FIG. 6, a wall on the front surface of the machining tank 10 is not illustrated to allow the inside of the machining tank 10 to be visible.

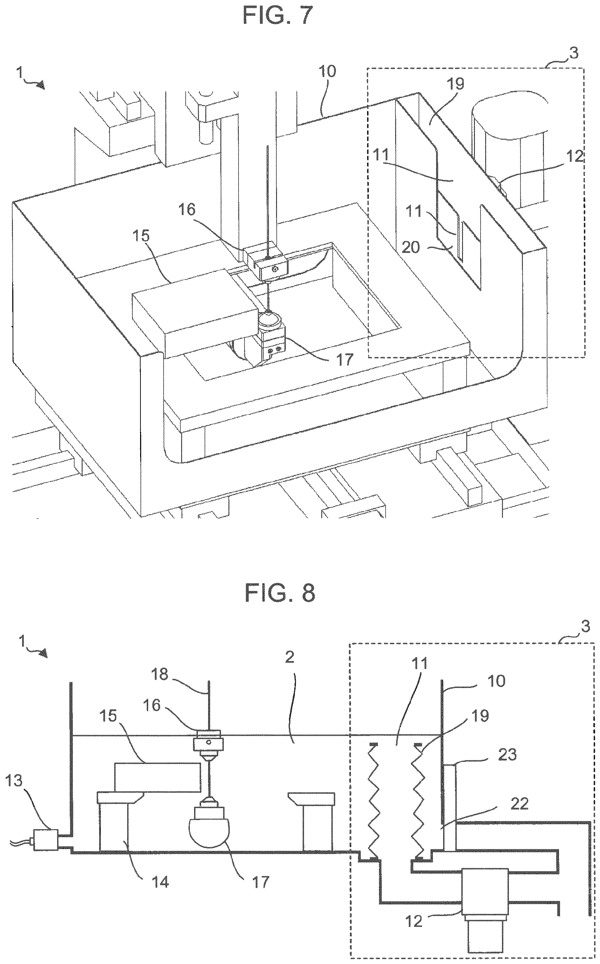

Next, a machining fluid level adjusting mechanism for a wire electric discharge machine according to a fifth embodiment of the present invention will be described with reference to FIG. 7.

The machining fluid level adjusting mechanism 3 according to the present embodiment corresponds to the configuration in which a slit-shaped machining fluid intake opening 11 is formed on the overflow plate member 20 provided to the machining fluid level adjusting mechanism 3 in the second embodiment illustrated in FIG. 2. The other configurations and the operation of each component are similar to those of the second embodiment. Note that, in FIG. 7, a wall on the front surface of the machining tank 10 is not illustrated to allow the inside of the machining tank 10 to be visible.

Next, a machining fluid level adjusting mechanism for a wire electric discharge machine according to a sixth embodiment of the present invention will be described with reference to FIG. 8.

The machining fluid level adjusting mechanism 3 according to the present embodiment corresponds to the configuration in which an exhaust opening 22, which is different from the machining fluid intake opening 11 formed on the upper end of the machining fluid outlet portion 19, and a drain mechanism 23 are added to the accordion-shaped machining fluid outlet portion 19 provided to the machining fluid level adjusting mechanism 3 in the first embodiment illustrated in FIG. 1. The other configurations and the operation of each component are similar to those of the first embodiment.

The exhaust opening 22 and the drain mechanism 23 are activated when the machining fluid 2 in the machining tank 10 is to be drained. However, they are not for adjusting the level of the machining fluid 2 as the exhaust valve 12 does. If the machining fluid intake opening 11 formed on the upper end of the machining fluid outlet portion 19 is lowered to the lowermost part in the first embodiment illustrated in FIG. 1, the machining fluid 2 in the machining tank 10 can be drained, but the drainage speed is limited. In view of this, in the present embodiment, the drain mechanism 23 is provided separately from the machining fluid intake opening 11 in order to increase the drainage speed. In addition, in the present embodiment, the machining fluid 2 drained by the drain mechanism 23 is drained without passing through the exhaust valve 12. However, it is obvious that the similar effect can be obtained even if the drain mechanism 23 is in communication with the side closer to the machining tank 10 than the exhaust valve 12.

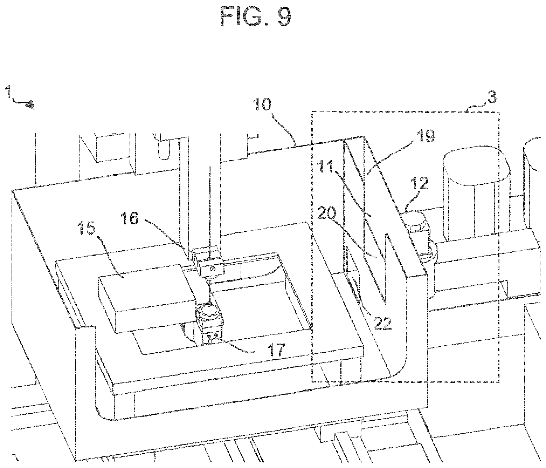

Next, a machining fluid level adjusting mechanism for a wire electric discharge machine according to a seventh embodiment of the present invention will be described with reference to FIG. 9.

The machining fluid level adjusting mechanism 3 according to the present embodiment corresponds to the configuration in which an exhaust opening 22, which is different from the machining fluid intake opening 11 of the overflow plate member 20, and an unillustrated drain mechanism 23 are added to the overflow plate member 20 provided to the machining fluid level adjusting mechanism 3 in the second embodiment illustrated in FIG. 2 (FIG. 9 illustrates the state in which the drain mechanism 23 is opened). The other configurations and the operation of each component are similar to those of the first embodiment. Note that, in FIG. 9, a wall on the front surface of the machining tank 10 is not illustrated to allow the inside of the machining tank 10 to be visible.

While the embodiments of the present invention have been described above, the present invention is not limited to these embodiments described above, and can be embodied in a variety of other forms by being modified as appropriate.

## Claims

1. A machining fluid level adjusting mechanism for a wire electric discharge machine, wherein
the wire electric discharge machine includes a wire electrode stretched between an upper head and a lower head to machine a workpiece fixed on a table in a machining tank and immersed in a machining fluid, and
the machining fluid level adjusting mechanism comprises:
a machining fluid intake opening provided in the machining tank so as to be vertically movable;
an exhaust valve for adjusting an exhaust amount of the machining fluid taken from the machining fluid intake opening; and
a machining fluid outlet portion that guides the machining fluid taken from the machining fluid intake opening to the exhaust valve, wherein
the machining fluid level adjusting mechanism is configured to control such that a level of the machining fluid in the machining tank becomes uniform by adjusting the exhaust valve.

2. A machining fluid level adjusting mechanism for a wire electric discharge machine, wherein
the wire electric discharge machine includes a wire electrode stretched between an upper head and a lower head to machine a workpiece fixed on a table in a machining tank and immersed in a machining fluid, and
the machining fluid level adjusting mechanism comprises:
two or more machining fluid intake openings from which a machining fluid is taken at each of positions with different heights and which are provided in the machining tank so as to be vertically movable;
an exhaust valve for adjusting an exhaust amount of the machining fluid taken from the machining fluid intake openings; and
a machining fluid outlet portion that guides the machining fluid taken from the machining fluid intake openings to the exhaust valve, wherein
the machining fluid level adjusting mechanism is configured to control such that a level of the machining fluid in the machining tank becomes uniform by adjusting the exhaust valve.

3. The machining fluid level adjusting mechanism for a wire electric discharge machine according to claim 1 or 2, comprising a drain mechanism for draining the machining fluid in the machining tank, separately from the machining fluid intake opening.
